# EUROPÄISCHE PATENTANMELDUNG

(11) **EP 3 785 840 A1**
(43) Veröffentlichungstag der Anmeldung: **03.03.2021**
(21) Anmeldenummer: 19194220.0
(22) Anmeldetag: 29.08.2019
(51) Int. Cl.: B23K 11/30

(54) **VORRICHTUNG UND VERFAHREN ZUM KLEMMEN UND HALTEN EINER ELEKTRODENKAPPE UND ZUM ABDREHEN DER ELEKTRODENKAPPE VON EINER ELEKTRODENKAPPEN-AUFNAHME**

(71) Anmelder: Lutz Precision, K.S., 84104 Bratislava (SK)
(72) Erfinder: HOFER, Philipp, 2632 Wimpassing (AT)
(74) Vertreter: Grünecker Patent- und Rechtsanwälte PartG mbB

(57) **Zusammenfassung**

Die Erfindung betrifft eine Vorrichtung zum Klemmen und Halten einer Elektrodenkappe und zum Abdrehen der Elektrodenkappe von einer Elektrodenkappen-Aufnahme eines Endes einer Schweißzange eines Schweißroboters. Die Vorrichtung umfasst einen Einbringbereich mit einer Mittelachse für eine Elektrodenkappe, die auf einer Elektrodenkappen-Aufnahme angeordnet ist, eine Klemmeinheit und einen ersten ansteuerbaren Motor. Eine erste Motorkraft des ersten Motors kann im Zusammenwirken mit der Klemmeinheit eine in den Einbringbereich eingebrachte Elektrodenkappe auf einer Elektrodenkappen-Aufnahme dadurch vor, während und nach einem Abdrehen der Elektrodenkappe von der Elektrodenkappen-Aufnahme spannungskraftschlüssig klemmen und halten. Die Vorrichtung umfasst einen zweiten ansteuerbaren Motor, der ausgebildet ist, wenn eine Elektrodenkappe mittels der ersten Motorkraft im Zusammenwirken mit der Klemmeinheit spannungskraftschlüssig geklemmt und gehalten wird, die Elektrodenkappe von der Elektrodenkappen-Aufnahme abzudrehen. Der erste und der zweite Motor sind unabhängig voneinander ansteuerbar ausgebildet.

## Beschreibung

Die Erfindung betrifft eine Vorrichtung zum Klemmen und Halten einer Elektrodenkappe und zum Abdrehen der Elektrodenkappe von einer Elektrodenkappen-Aufnahme gemäß dem Oberbegriff des Anspruchs 1 und ein Verfahren zum Klemmen und Halten einer Elektrodenkappe und zum Abdrehen der Elektrodenkappe von einer Elektrodenkappen-Aufnahme gemäß Anspruch 11.

### Stand der Technik

Schweißroboter haben einen computergesteuerten Roboterarm mit einer Punktschweißzange, die an den einander gegenüberliegenden Zangenenden je eine Elektrodenkappen-Aufnahme aufweist, auf die jeweils eine Elektrodenkappe aufsteckbar ist. Zur selbstständigen Fixierung der Elektrodenkappen sind die Elektrodenkappen-Aufnahmen der Schweißzangen üblicherweise zu ihrem freien Ende hin verjüngt ausgebildet (Haltekonus), so dass eine aufgesetzte Elektrodenkappe unter federnder Wirkung durch die Presskraft der Schweißzange oder mittels eines vorbestimmten Anpressdrucks auf der Aufnahme fixiert werden kann.

Zum Wechseln der Elektrodenkappen sind Kappenwechsler in Roboterschweißanlagen im Einsatz, mit denen die Schweißkappen von einer als Haltekonus ausgebildeten Elektrodenkappenhalterung gelöst werden können. Dazu kann eine Elektrodenkappe von der Aufnahme durch eine Drehbewegung automatisiert gelöst werden. Beispielsweise kann ein Stirnrad vorgesehen sein, in dessen zentrale Öffnung eine Elektrodenkappe einbringbar ist. Auf einem Kreis um die Achse des Stirnrads können auf beidseitig vorstehenden Zapfen drei Spannbacken in gleichen Winkelabständen voneinander schwenkbar gelagert sein. Jede Spannbacke ist mit einer Zugfeder in Richtung auf die Elektrodenkappe belastet, so dass bei Drehung des Stirnrads in der einen Richtung die Zugfedern die Spannbacken gegen die Elektrodenkappe ziehen, wobei die Elektrodenkappe während des Abziehens geklemmt und gehalten werden kann, und die Elektrodenkappe von der Schweißzange abgezogen werden kann während gleichzeitig das Geklemmt- und Gehaltenwerden der Elektrodenkappe nachlässt. Wenn das Stirnrad nach Entfernen der Schweißzange aus dem Kappenwechsler in die andere Richtung gedreht wird, wird im Allgemeinen die Elektrodenkappe komplett freigegeben.

Hin und wieder tritt - in nicht vorhersehbaren Abständen - das Problem auf, dass während und nach dem Abdrehen der Elektrodenkappe die Elektrodenkappe nicht von den Spannbacken sicher gehalten wird, so dass die Elektrodenkappe beim Entfernen der Schweißzange fallengelassen wird und nach unten wieder auf die Schweißzange zurückrutscht und auf der Schweißzange verbleibt. Dies führt im Allgemeinen zu einem Not-Stopp und einem Stopp der ganzen Linie. Die fallengelassene Elektrodenkappe muss erst entfernt werden, bevor die Linie wieder anfahren kann.

### Aufgabe

Die zu lösende technische Aufgabe darin, eine Vorrichtung und ein Verfahren zum Abdrehen der Elektrodenkappe von der Elektrodenkappen-Aufnahme anzugeben, mit denen ein Zurückrutschen und Verbleiben einer abgedrehten Elektrodenkappe auf einer Elektrodenkappen-Aufnahme verhindert wird.

### Lösung

Diese Aufgabe wird erfindungsgemäß durch die Vorrichtung nach Anspruch 1 und das Verfahren nach Anspruch 11 gelöst. Weitere Ausführungsformen und Weiterbildungen werden von den abhängigen Ansprüchen erfasst.

Die erfindungsgemäße Vorrichtung zum Klemmen und Halten einer Elektrodenkappe und zum Abdrehen der Elektrodenkappe von einer Elektrodenkappen-Aufnahme eines Endes einer Schweißzange eines Schweißroboters umfasst einen Einbringbereich mit einer Mittelachse für eine Elektrodenkappe, die auf einer Elektrodenkappen-Aufnahme am Ende einer Schweißzange eines Schweißroboters angeordnet ist. Die Vorrichtung umfasst weiter eine Klemmeinheit und einen ersten ansteuerbaren Motor, wobei eine erste Motorkraft des ersten Motors im Zusammenwirken mit der Klemmeinheit eine in den Einbringbereich eingebrachte Elektrodenkappe auf einer Elektrodenkappen-Aufnahme eines Endes einer Schweißzange eines Schweißroboters vor, während und nach einem Abdrehen der Elektrodenkappe von der Elektrodenkappen-Aufnahme spannungskraftschlüssig klemmen und halten kann. Die Vorrichtung umfasst weiter einen zweiten ansteuerbaren Motor, der ausgebildet ist, wenn eine Elektrodenkappe mittels der ersten Motorkraft des ersten Motors im Zusammenwirken mit der Klemmeinheit spannungskraftschlüssig geklemmt und gehalten wird, die Elektrodenkappe von der Elektrodenkappen-Aufnahme abzudrehen.

Durch das Vorsehen des ersten Motors und des zweiten Motors können eine Klemmkraft der Klemmeinheit und eine Abdrehkraft für die Abdrehbewegung der Elektrodenkappe in der Vorrichtung voneinander entkoppelt sein.

Durch das Vorsehen des ersten Motors, der im Zusammenwirken mit der Klemmeinheit für das Klemmen und Halten der Elektrodenkappe zuständig ist und durch das Vorsehen des zweiten Motors, der für das Abdrehen der Elektrodenkappe zuständig ist, wird das Halten der Elektrodenkappe nach dem Abdrehen sicherer und die Gefahr eines Zurückrutschens der Elektrodenkappe auf die Elektrodenkappen-Aufnahme kann minimiert werden.

Zum Halten und Klemmen kann eine Klemm- und Haltekraft der Klemmeinheit, die durch die erste Motorkraft des ersten Motors bedingt wird, zur Mittelachse hin wirken, beispielsweise im Wesentlichen senkrecht oder senkrecht zur Mittelachse, d.h. beispielsweise radial oder im Wesentlichen radial zur Mittelachse.

Während die Elektrodenkappe weiter geklemmt und gehalten wird, kann ein Abdrehen der Elektrodenkappe ausgeführt werden. Während des Abdrehens der Elektrodenkappe kann das Ende mit der Elektrodenaufnahme auf der gleichen Position verbleiben, d.h., wird im Besonderen nicht gedreht. Zum Abdrehen der Elektrodenkappe kann der zweite ansteuerbare Motor rotieren und seine Abdrehkraft übertragen. Da die Klemmkraft von der Abdrehbewegung, beispielsweise durch ein Vorsehen von zwei Lagern, entkoppelt sein kann, können die Klemmkraft und die Abdrehkraft separat gesteuert werden. Zum Abdrehen der Elektrodenkappe kann der zweite ansteuerbare Motor in die eine oder in die andere Richtung rotieren.

Der erste Motor und der zweite Motor können unabhängig voneinander ansteuerbar ausgebildet sein.

Die Klemmeinheit kann mindestens zwei Klemmbacken umfassen, die derart ausgebildet und angeordnet sind, dass die Klemmbacken durch die erste Motorkraft zum Halten und Klemmen einer Elektrodenkappe jeweils zumindest teilweise mit einer Seite, die der Mittelachse zugewandt ist, in Kontakt mit einer äußeren Oberfläche einer in den Einbringbereich eingebrachten Elektrodenkappe bringbar sein können, wodurch die Elektrodenkappe spannungskraftschlüssig klemm- und haltbar sein kann, wobei die Klemmbacken zum Halten und Klemmen beispielsweise in eine Richtung auf die Mittelachse des Einbringbereichs zu bewegbar sind.

Beispielsweise kann das Material der Klemmbacken eine größere Härte aufweisen als das Material der Elektrodenkappe.

Die Klemmbacken können auf der der Mittelachse zugewandten Seite eine raue Oberfläche aufweisen, beispielsweise eine Zick-Zack-Form. Dadurch kann das Klemmen und Halten einer Elektrodenkappe sicherer erfolgen.

Die Klemmbacken können auf einer von der Mittelachse abgewandten Seite keilförmig ausgebildet sein, wobei eine Dicke der keilförmigen Ausbildung, in einer Einbringrichtung entlang der Mittelachse gesehen, abnehmen kann.

Die Klemmeinheit kann weiter einen Schieber und einen Keil umfassen. Dabei kann eine äußere Oberfläche des Keils, die der Mittelachse zugewandt ist, zumindest teilweise mit der von der Mittelachse abgewandten Seite der Klemmbacken zum Klemmen und Halten einer Elektrodenkappe in Kontakt bringbar sein und durch ein Zusammenwirken einer gegenüberliegenden äußeren Oberfläche des Keils, die von der Mittelachse abgewandt ist, mit dem Schieber kann der Keil in eine/die Einbringrichtung oder in eine Ausbringrichtung bewegbar sein.

Die äußere Oberfläche des Keils, die der Mittelachse zugewandt ist, kann derart ausgebildet sein, dass sie zumindest teilweise mit einer von der Mittelachse abgewandten Seite der Klemmbacken in Kontakt gebracht werden kann; beispielsweise können diese Seiten komplementär ausgebildet sein.

Die gegenüberliegende äußere Oberfläche des Keils kann eine Aussparung in dem Keil aufweisen, in der zwei Lager angeordnet sein können, wobei zwischen den zwei Lagern der Klemmeinheit ein erster Vorsprung des Schiebers eingreifen kann, wodurch eine Kraft mittels des ersten Vorsprungs von dem Schieber an den Keil übertragbar ist. Die Lager können Kugellager sein. Durch das Vorsehen der beiden Lager kann die Klemmkraft des ersten ansteuerbaren Motors von einer durch den zweiten ansteuerbaren Motor ausgeführte Abdrehbewegung entkoppelt sein. Daher können die Klemmkraft und eine Abdrehkraft des zweiten ansteuerbaren Motors separat gesteuert werden. Zum Abdrehen einer Elektrodenkappe kann der zweite ansteuerbare Motor in die eine oder in die andere Richtung rotieren. Während des Abdrehens einer Elektrodenkappe kann das Ende mit der Elektrodenaufnahme auf der gleichen Position verbleiben, d.h., das Ende mit der Elektrodenaufnahme wird im Besonderen nicht gedreht. Mittels der Abdrehkraft kann die Elektrodenkappe abgedreht werden, die geklemmt und gehalten wird.

Der erste Vorsprung kann zu der gegenüberliegenden äußeren Oberfläche des Keils einen Abstand aufweisen.

Der Schieber kann weiter eine Mehrzahl von zweiten Vorsprüngen auf einer von der Mittelachse abgewandten Seite und die Klemmeinheit weiter einen Ring mit einer Mehrzahl von dritten Vorsprüngen auf einer der Mittelachse zugewandten Seite umfassen, wobei die dritten Vorsprünge zwischen die zweiten Vorsprünge greifen können, wobei eine Drehung des Rings mittels des ersten Motors in eine erste Richtung oder in eine zweite Richtung ausführbar sein kann, wodurch die erste Motorkraft übertragbar sein kann.

Durch das Vorsehen der zweiten und dritten Vorsprünge kann beispielsweise eine Drehbewegung des ersten Motors um 90° umgeleitet werden.

Weiter kann die Vorrichtung eine Steuervorrichtung umfassen, die ausgebildet sein kann, den ersten und den zweiten Motor anzusteuern, beispielsweise unabhängig voneinander. Es kann alternativ eine Steuervorrichtung vorgesehen sein, die kein Teil der Vorrichtung ist, aber damit kommunikativ verbunden sein kann und die ausgebildet sein kann, den ersten und den zweiten Motor unabhängig voneinander anzusteuern.

Zudem betrifft die Erfindung ein Verfahren zum Klemmen und Halten einer Elektrodenkappe und zum Abdrehen der Elektrodenkappe von einer Elektrodenkappen-Aufnahme eines Endes einer Schweißzange eines Schweißroboters unter Verwendung einer Vorrichtung zum Klemmen und Halten einer Elektrodenkappe und zum Abdrehen der Elektrodenkappe von einer Elektrodenkappen-Aufnahme eines Endes einer Schweißzange eines Schweißroboters wie oben oder weiter unten beschrieben.

Das Verfahren kann mittels einer Steuervorrichtung, die Teil der Vorrichtung ist, oder mittels einer Steuervorrichtung, die kein Teil der Vorrichtung ist, aber damit kommunikativ verbunden ist, gesteuert und/oder ausgeführt werden. Der erste und/oder der zweite Motor können entsprechend mittels der Steuervorrichtung unabhängig voneinander angesteuert werden.

Das Verfahren kann die Schritte umfassen:
- Einbringen einer Schweißzange eines Schweißroboters, wobei eine Elektrodenkappe auf einer Elektrodenkappen-Aufnahme eines Endes der Schweißzange angeordnet ist, in einen Einbringbereich ;
- nach dem Einbringen, Klemmen und Halten der Elektrodenkappe mittels der Klemmeinheit mittels einer Motorkraft eines ersten ansteuerbaren Motors;
- nach dem Klemmen und Halten, Abdrehen der Elektrodenkappe von der Elektrodenkappen-Aufnahme mittels einer Motorkraft eines zweiten ansteuerbaren Motors, während die Elektrodenkappe weiterhin geklemmt und gehalten wird;
- nach dem Abdrehen, Ausbringen der Schweißzange ohne die Elektrodenkappe aus dem Einbringbereich, während die abgedrehte Elektrodenkappe weiterhin geklemmt und gehalten wird; und
- nach dem Ausbringen, Loslassen der abgedrehten Elektrodenkappe.

### Figurenbeschreibung

Die beigefügten Figuren stellen beispielhaft zum besseren Verständnis und zur Veranschaulichung Aspekte und Ausführungsformen der Erfindung dar. Es zeigt:
Figur 1 eine schematische Ansicht einer Vorrichtung zum Klemmen und Halten einer Elektrodenkappe und zum Abdrehen der Elektrodenkappe, in die eine Elektrodenkappe eingebracht wird,
Figur 2 die Vorrichtung der Figur 1, in der die Elektrodenkappe geklemmt und gehalten wird,
Figur 3 die Vorrichtung der Figur 1, in der die Elektrodenkappe geklemmt und gehalten wird, während ein Abdrehen der Elektrodenkappe beginnt,
Figur 4 die Vorrichtung der Figur 1, in der die Schweißzange ohne die Elektrodenkappe ausgebracht wird, während die Elektrodenkappe geklemmt und gehalten wird,
Figur 5 die Vorrichtung der Figur 1, in der die Elektrodenkappe losgelassen wurde, nach dem die Schweißzange vollständig entfernt wurde und
Figur 6 ein Flussdiagramm eines Verfahrens zum Klemmen einer Elektrodenkappe und zum Abdrehen der Elektrodenkappe von einer Elektrodenkappen-Aufnahme eines Endes einer Schweißzange eines Schweißroboters.

### Ausführliche Beschreibung

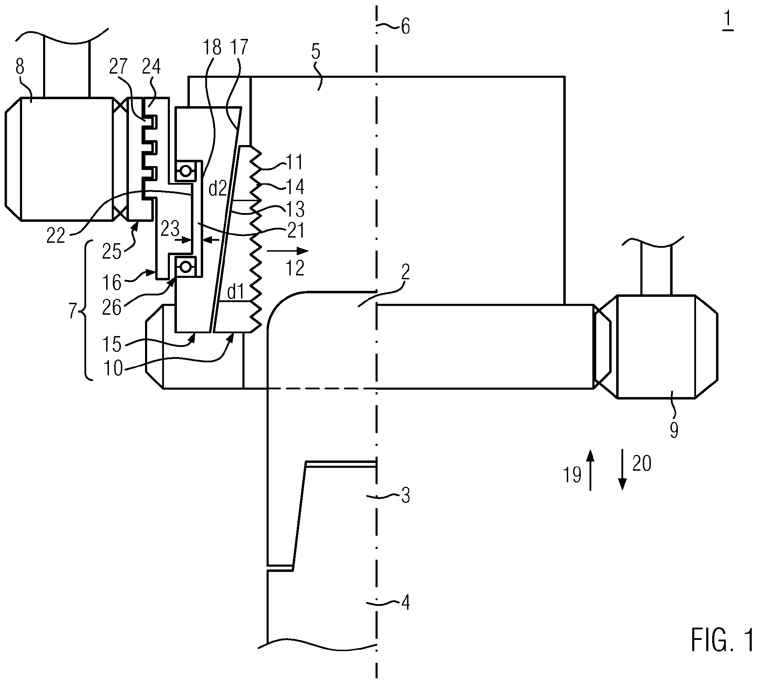

Die Figur 1 zeigt eine schematische Ansicht einer Vorrichtung 1 zum Klemmen und Halten einer Elektrodenkappe 2 und zum Abdrehen der Elektrodenkappe 2 von einer Elektrodenkappen-Aufnahme 3 eines Endes 4 einer Schweißzange eines Schweißroboters. In der Figur 1 wird in einen Einbringbereich 5 mit einer Mittelachse 6 die Elektrodenkappe 2 durch Bewegen der Schweißzange in eine Einbringrichtung 19 eingebracht. In der Darstellung ist dieser Einbringprozess noch nicht ganz abgeschlossen.

Die Vorrichtung 1 umfasst eine Klemmeinheit 7, die ihrerseits Klemmbacken 10 (von denen eine zu sehen ist), einen Keil 15, einen Schieber 16, einen Ring 25 und zwei Lager 26, beispielsweise Kugellager, umfasst. Die Klemmeinheit 7 ist derart ausgebildet, dass eine erste Motorkraft eines ersten ansteuerbaren Motors 8 im Zusammenwirken mit der Klemmeinheit 7 eine in den Einbringbereich 5 eingebrachte Elektrodenkappe 2 vor, während und nach einem Abdrehen der Elektrodenkappe 2 von der Elektrodenkappen-Aufnahme 3 spannungskraftschlüssig klemmen und halten kann.

Die dargestellte Klemmbacke 10 weist auf einer der Mittelachse 6 zugewandten Seite 11 eine raue Oberfläche auf, in der Darstellung beispielsweise eine Zick-Zack-Form 14. Die Klemmbacke 10 ist auf einer von der Mittelachse 6 abgewandten Seite 13 keilförmig ausgebildet, wobei eine Dicke d1, d2 der keilförmigen Ausbildung, in der Einbringrichtung 19 entlang der Mittelachse 6 gesehen, abnimmt.

Eine äußere Oberfläche 17 des Keils 15, die der Mittelachse 6 zugewandt ist, ist derart ausgebildet, dass sie zumindest teilweise mit einer von der Mittelachse 6 abgewandten Seite 13 der Klemmbacke 10 in Kontakt gebracht werden kann.

Die gegenüberliegende äußere Oberfläche 18 des Keils 15, die von der Mittelachse 6 abgewandt ist, weist eine Aussparung 21 in dem Keil 15 auf, in der die zwei Lager 26 angeordnet sind. Zwischen den zwei Lagern 26 greift ein erster Vorsprung 22 des Schiebers 16 ein, der in der Darstellung zu der gegenüberliegenden äußeren Oberfläche 18 des Keils 15 einen Abstand 23 aufweist.

Der Schieber 16 weist auf einer von der Mittelachse 6 abgewandten Seite weiter eine Mehrzahl von zweiten Vorsprüngen 24 auf, und der Ring 25 umfasst auf einer der Mittelachse 6 zugewandten Seite eine Mehrzahl von dritten Vorsprüngen 27. Die dritten Vorsprünge 27 greifen zwischen die zweiten Vorsprünge 24, wodurch eine Drehung des Rings 25 mittels des ersten Motors 8 in eine erste Richtung oder in eine zweite Richtung ausführbar ist und wodurch die erste Motorkraft übertragbar ist.

Somit kann eine Kraft mittels des ersten Vorsprungs 22 von dem Schieber 16 an den Keil 15 übertragen werden. Durch eine Drehung des Rings 25 in die erste Richtung ist durch ein Zusammenwirken einer gegenüberliegenden äußeren Oberfläche 18 des Keils 15, die von der Mittelachse 6 abgewandt ist, mit dem Schieber 16 der Keil 15 in eine Ausbringrichtung 20 bewegbar. Dadurch kann der Keil 15 mit der äußeren Oberfläche 17, die der Mittelachse 6 zugewandt ist, die Klemmbacke 10 in eine Richtung 12 auf die Mittelachse zu bewegen.

Zudem umfasst die Vorrichtung 1 einen zweiten ansteuerbaren Motor 9, der ausgebildet ist, wenn eine Elektrodenkappe 2 mittels der ersten Motorkraft des ersten Motors 8 im Zusammenwirken mit der Klemmeinheit 7 spannungskraftschlüssig geklemmt und gehalten wird, die Elektrodenkappe 2 von der Elektrodenkappen-Aufnahme 3 abzudrehen.

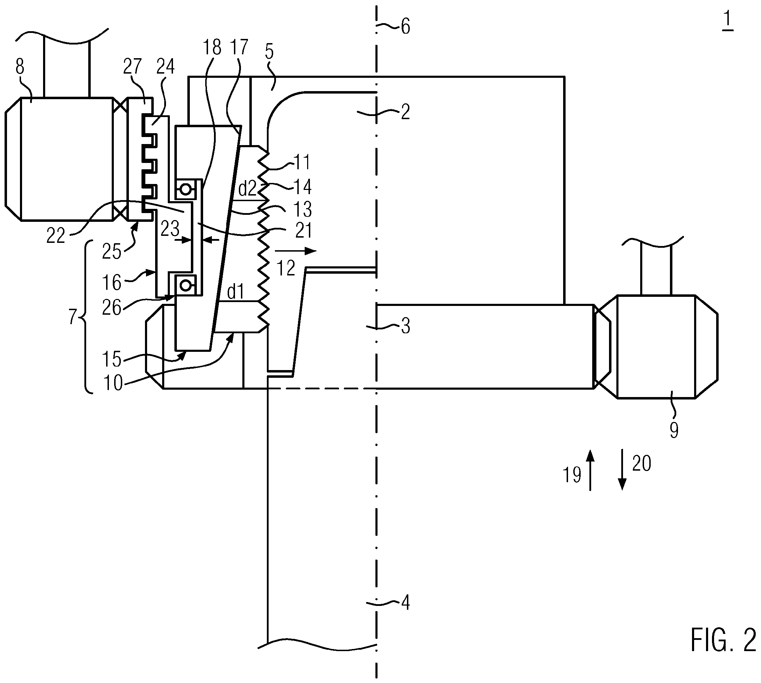

Die Figur 2 zeigt die Vorrichtung der Figur 1, in der die Elektrodenkappe 2 nach dem Einbringen in den Einbringbereich 5 geklemmt und gehalten wird.

Das Klemmen und Halten mittels der Klemmbacke 10 wurde erreicht, in dem der erste Motor 8 den Ring 25 in die erste Richtung drehte, der Ring 25 durch die dritten Vorsprünge 27, die zwischen die zweiten Vorsprünge 24 des Schiebers 16 greifen, den Schieber 16 in die Ausbringrichtung 20 bewegte, wodurch der Schieber 16 auf die Lager 26, die in der Aussparung des Keils 15 angeordnet sind, einwirkte, so dass der Keil 15 ebenfalls in die Ausbringrichtung 20 bewegt wurde. Durch die Bewegung des Keils 15 in die Ausbringrichtung 20 kam die äußere Oberfläche 17 des Keils 15, die der Mittelachse 6 zugewandt ist, zumindest teilweise mit der von der Mittelachse 6 abgewandten Seite 13 der Klemmbacke 10 in Kontakt, wodurch die Klemmbacke 10 in eine Richtung 12 auf die Mittelachse 6 zu bewegt wurde. Durch die Bewegung der Klemmbacke 10 in die Richtung 12 auf die Mittelachse 6 zu, wurde die Klemmbacke 10 durch die erste Motorkraft in Kontakt mit einer äußeren Oberfläche der in den Einbringbereich 5 eingebrachten Elektrodenkappe 2 gebracht, wodurch eine Klemmkraft des ersten ansteuerbaren Motors 8 übertragen und die Elektrodenkappe 2 dann spannungskraftschlüssig geklemmt und gehalten wird.

Nachdem die Elektrodenkappe 2 spannungskraftschlüssig geklemmt und gehalten wird, kann ein Abdrehen der Elektrodenkappe 2 von der Elektrodenkappen-Aufnahme 3 erfolgen.

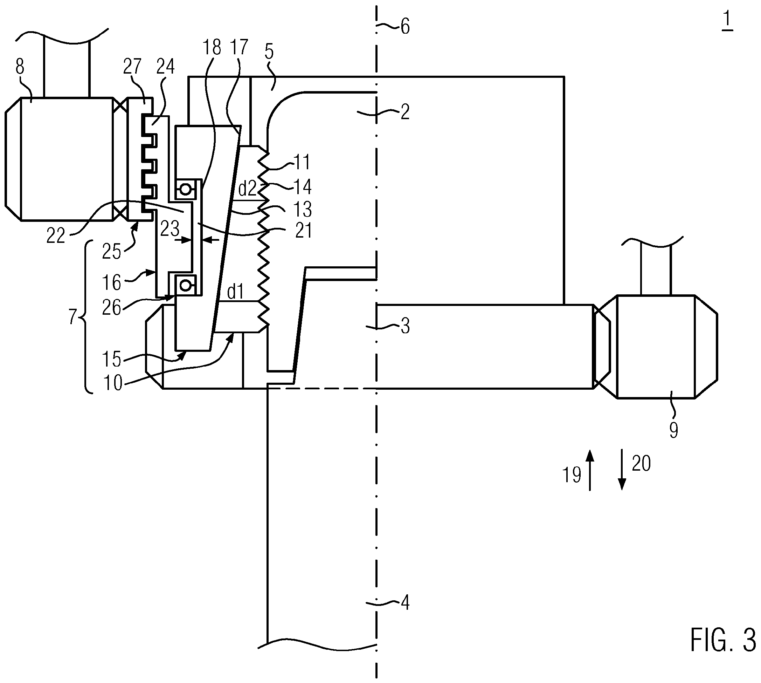

Die Figur 3 zeigt die Vorrichtung 1 der Figur 1, in der die Elektrodenkappe 2 weiter geklemmt und gehalten wird, während ein Abdrehen der Elektrodenkappe 2 ausgeführt wird. Während des Abdrehens der Elektrodenkappe 2 verbleibt das Ende 4 mit der Elektrodenaufnahme 3 auf der gleichen Position, d.h., wird im Besonderen nicht gedreht. Zum Abdrehen der Elektrodenkappe 2 rotiert der zweite ansteuerbare Motor 9 und überträgt seine Abdrehkraft. Da die Klemmkraft von der Abdrehbewegung durch die beiden Lager 26 entkoppelt ist, können die Klemmkraft und die Abdrehkraft separat gesteuert werden. Zum Abdrehen der Elektrodenkappe 2 kann der zweite ansteuerbare Motor 9 in die eine oder in die andere Richtung rotieren.

Die Elektrodenkappe 2 wird während des Abdrehens und auch nach Beendigung des Abdrehens spannungskraftschlüssig geklemmt und gehalten.

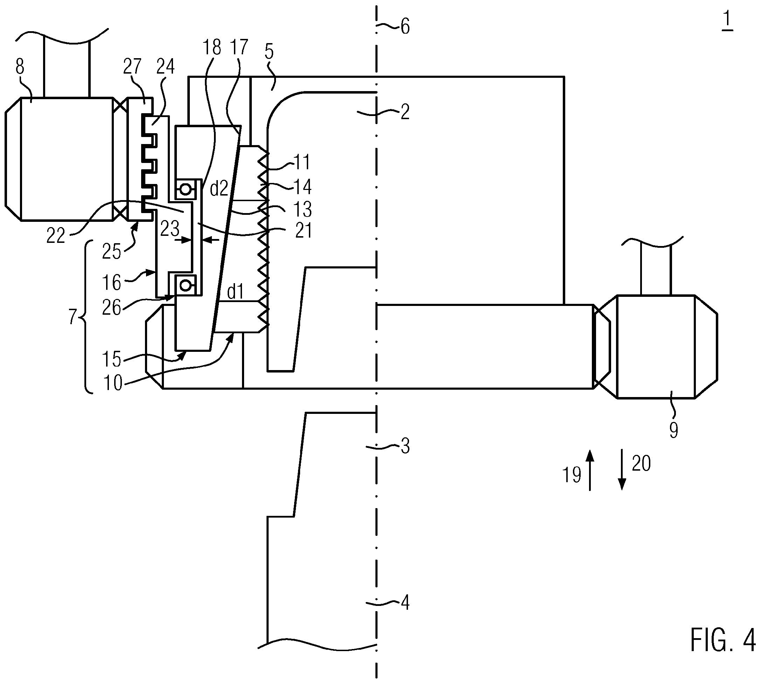

Die Figur 4 zeigt die Vorrichtung 1 der Figur 1, in der die Schweißzange mit der Elektrodenaufnahme 3 und dem Ende 4 ohne die Elektrodenkappe in der Ausbringrichtung 20 aus dem Einbringbereich 5 ausgebracht wird, während die abgedrehte Elektrodenkappe 2 weiter geklemmt und gehalten wird.

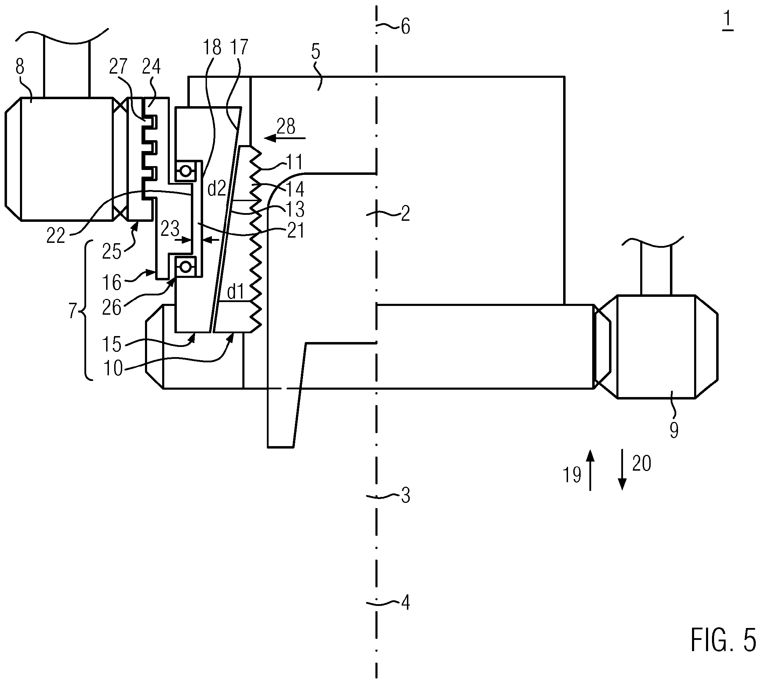

Die Figur 5 zeigt die Vorrichtung 1 der Figur 1, in der die Elektrodenkappe 2 losgelassen wurde, nach dem die Schweißzange vollständig entfernt wurde.

Das Freigeben der Elektrodenkappe 2 wurde erreicht, in dem der erste Motor 8 den Ring 25 in die zweite Richtung drehte, der Ring 25 durch die dritten Vorsprünge 27, die zwischen die zweiten Vorsprünge 24 des Schiebers 16 greifen, den Schieber 16 in die Einbringrichtung 19 bewegte, wodurch der Schieber 16 auf die Lager 26, die in der Aussparung des Keils 15 angeordnet sind, einwirkte, so dass der Keil 15 ebenfalls in die Einbringrichtung 19 bewegt wurde. Durch die Bewegung des Keils 15 in die Einbringrichtung 19 kam die äußere Oberfläche 17 des Keils 15, die der Mittelachse 6 zugewandt ist, zumindest teilweise mit der von der Mittelachse 6 abgewandten Seite 13 der Klemmbacke 10 außer Kontakt, wodurch die Klemmbacke 10 in eine Richtung 28 von der Mittelachse 6 wegbewegt wurde. Durch diese Bewegung der Klemmbacke 10 in die Richtung 28 von der Mittelachse 6 weg, wurde die Klemmbacke 10 außer Kontakt mit der äußeren Oberfläche der abgedrehten Elektrodenkappe 2 gebracht, wodurch die Elektrodenkappe 2 losgelassen wurde.

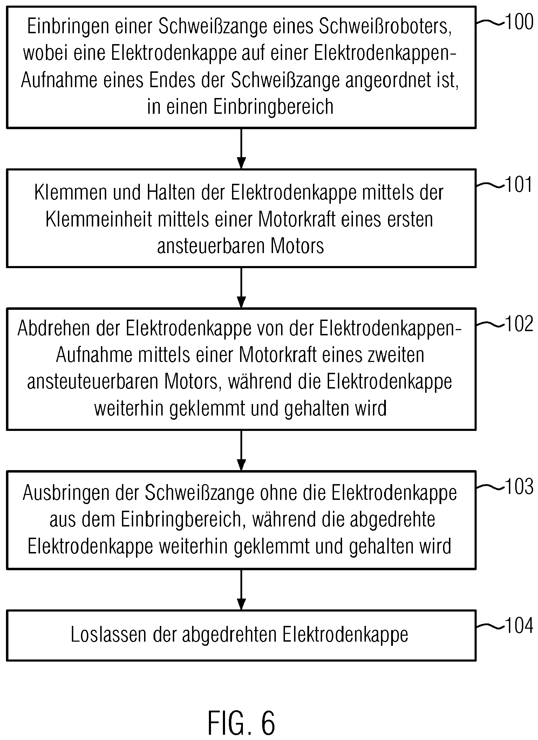

Die Figur 6 zeigt ein Flussdiagramm eines Verfahrens zum Klemmen und Halten einer Elektrodenkappe 2 und zum Abdrehen der Elektrodenkappe 2 von einer Elektrodenkappen-Aufnahme 3 eines Endes 4 einer Schweißzange eines Schweißroboters.

Im Schritt 100 kann ein Einbringen einer Schweißzange eines Schweißroboters in einen Einbringbereich 5 der Vorrichtung erfolgen, wobei eine Elektrodenkappe 2 auf einer Elektrodenkappen-Aufnahme 3 eines Endes 4 der Schweißzange angeordnet ist.

Nach dem Einbringen, erfolgt im Schritt 101 ein Klemmen und Halten der Elektrodenkappe 2 mittels der Klemmeinheit 7 mittels einer ersten Motorkraft eines ersten ansteuerbaren Motors 8.

Nach dem Klemmen und Halten, erfolgt im Schritt 102 ein Abdrehen der Elektrodenkappe 2 von der Elektrodenkappen-Aufnahme 3 mittels einer zweiten Motorkraft eines zweiten ansteuerbaren Motors 9, während die Elektrodenkappe 2 weiterhin geklemmt und gehalten wird.

Nach dem Abdrehen, erfolgt im Schritt 103 ein Ausbringen der Schweißzange ohne die Elektrodenkappe aus dem Einbringbereich 5, während die abgedrehte Elektrodenkappe 2 weiterhin von der Klemmeinheit 7 geklemmt und gehalten wird.

Nach dem Ausbringen, erfolgt im Schritt 104 ein Loslassen der abgedrehten Elektrodenkappe 2.

## Patentansprüche

1. Vorrichtung (1) zum Klemmen und Halten einer Elektrodenkappe (2) und zum Abdrehen der Elektrodenkappe (2) von einer Elektrodenkappen-Aufnahme (3) eines Endes (4) einer Schweißzange eines Schweißroboters, wobei die Vorrichtung (1) einen Einbringbereich (5) mit einer Mittelachse (6) für eine Elektrodenkappe (2), die auf einer Elektrodenkappen-Aufnahme (3) am Ende (4) einer Schweißzange eines Schweißroboters angeordnet ist, umfasst,
**dadurch gekennzeichnet, dass**
die Vorrichtung (1) eine Klemmeinheit (7) und einen ersten ansteuerbaren Motor (8) umfasst, wobei eine erste Motorkraft des ersten Motors (8) im Zusammenwirken mit der Klemmeinheit (7) eine in den Einbringbereich (5) eingebrachte Elektrodenkappe (2) auf einer Elektrodenkappen-Aufnahme (3) eines Endes (4) einer Schweißzange eines Schweißroboters vor, während und nach einem Abdrehen der Elektrodenkappe (2) von der Elektrodenkappen-Aufnahme (3) spannungskraftschlüssig klemmen und halten kann,
die Vorrichtung (1) einen zweiten ansteuerbaren Motor (9) umfasst, der ausgebildet ist, wenn eine Elektrodenkappe (2) mittels der ersten Motorkraft des ersten Motors (8) im Zusammenwirken mit der Klemmeinheit (7) spannungskraftschlüssig geklemmt und gehalten wird, die Elektrodenkappe (2) von der Elektrodenkappen-Aufnahme (3) abzudrehen.

2. Die Vorrichtung nach Anspruch 1, wobei der erste Motor (8) und der zweite Motor (9) unabhängig voneinander ansteuerbar ausgebildet sind.

3. Die Vorrichtung nach Anspruch 1 oder 2, wobei die Klemmeinheit (7) mindestens zwei Klemmbacken (10) umfasst, die derart ausgebildet und angeordnet sind, dass die Klemmbacken (10) durch die erste Motorkraft zum Halten und Klemmen einer Elektrodenkappe (2) zumindest jeweils teilweise mit einer Seite (11), die der Mittelachse (6) zugewandt ist, in Kontakt mit einer äußeren Oberfläche einer in den Einbringbereich (5) eingebrachten Elektrodenkappe (2 bringbar sind, wodurch die Elektrodenkappe (2) spannungskraftschlüssig klemm- und haltbar ist, wobei die Klemmbacken (10) zum Halten und Klemmen einer Elektrodenkappe beispielsweise in eine Richtung (12) auf die Mittelachse (6) des Einbringbereichs (5) zu bewegbar sind.

4. Die Vorrichtung nach Anspruch 3, wobei die Klemmbacken (10) auf der der Mittelachse (6) zugewandten Seite (11) eine raue Oberfläche aufweisen, beispielsweise eine Zick-Zack-Form (14).

5. Die Vorrichtung nach Anspruch 3 oder 4, wobei die Klemmbacken (10) auf einer der Mittelachse (6) abgewandten Seite (13) keilförmig ausgebildet sind, wobei eine Dicke (d1, d2) der keilförmigen Ausbildung, in einer Einbringrichtung (19) entlang der Mittelachse (6) gesehen, abnimmt.

6. Die Vorrichtung nach einem der Ansprüche 3 bis 5, wobei die Klemmeinheit (7) weiter einen Schieber (16) und einen Keil (15) umfasst, wobei eine äußere Oberfläche (17) des Keils (15), die der Mittelachse (6) zugewandt ist, zumindest teilweise mit einer von der Mittelachse (6) abgewandten Seite (13) der Klemmbacken (10) zum Halten und Klemmen einer Elektrodenkappe (2) in Kontakt bringbar ist und wobei durch ein Zusammenwirken einer gegenüberliegenden äußeren Oberfläche (18) des Keils (15), die von der Mittelachse (6) abgewandt ist, mit dem Schieber (16) der Keil (15) in eine/die Einbringrichtung (19) oder in eine Ausbringrichtung (20) bewegbar ist.

7. Die Vorrichtung nach Anspruch 6, wobei die gegenüberliegende äußere Oberfläche (18) des Keils (15) eine Aussparung (21) in dem Keil (15) aufweist, in der zwei Lager (26) der Klemmeinheit (7) angeordnet sind, wobei zwischen den zwei Lagern (26) ein erster Vorsprung (22) des Schiebers eingreift, wodurch eine Kraft mittels des ersten Vorsprungs (22) von dem Schieber (16) an den Keil (15) übertragbar ist.

8. Die Vorrichtung nach Anspruch 7, wobei der erste Vorsprung (22) des Schiebers zu der gegenüberliegenden äußeren Oberfläche (18) des Keils (15) einen Abstand (23) aufweist.

9. Die Vorrichtung nach Anspruch 7 oder 8, wobei der Schieber (16) weiter eine Mehrzahl von zweiten Vorsprüngen (24) auf einer von der Mittelachse (6) abgewandten Seite und die Klemmeinheit (7) weiter einen Ring (25) mit einer Mehrzahl von dritten Vorsprüngen (27) auf einer der Mittelachse zugewandten Seite umfasst, wobei die dritten Vorsprünge (27) zwischen die zweiten Vorsprünge (24) greifen, wobei eine Drehung des Rings (25) mittels des ersten Motors (8) in eine erste Richtung oder in eine zweite Richtung ausführbar ist, wodurch die erste Motorkraft übertragbar ist.

10. Die Vorrichtung nach einem der Ansprüche 1 bis 9, weiter umfassend eine Steuervorrichtung, die ausgebildet ist, den ersten Motor (8) und den zweiten Motor (9) anzusteuern, beispielsweise unabhängig voneinander.

11. Verfahren zum Klemmen und Halten einer Elektrodenkappe (2) und zum Abdrehen der Elektrodenkappe (2) von einer Elektrodenkappen-Aufnahme (3) eines Endes (4) einer Schweißzange eines Schweißroboters unter Verwendung einer Vorrichtung (1) zum Klemmen und Halten einer Elektrodenkappe (2) und zum Abdrehen der Elektrodenkappe (2) von einer Elektrodenkappen-Aufnahme (3) eines Endes (4) einer Schweißzange eines Schweißroboters nach einem der Ansprüche 1 bis 10.

12. Das Verfahren nach Anspruch 11, wobei das Verfahren die Schritte umfasst:
- Einbringen (100) einer Schweißzange eines Schweißroboters, wobei eine Elektrodenkappe (2) auf einer Elektrodenkappen-Aufnahme (3) eines Endes (4) der Schweißzange angeordnet ist, in einen Einbringbereich (5);
- nach dem Einbringen, Klemmen und Halten (101) der Elektrodenkappe (2) mittels der Klemmeinheit (7) mittels einer ersten Motorkraft eines ersten ansteuerbaren Motors (8);
- nach dem Klemmen und Halten, Abdrehen (102) der Elektrodenkappe (2) von der Elektrodenkappen-Aufnahme (3) mittels einer zweiten Motorkraft eines zweiten ansteuerbaren Motors (9), während die Elektrodenkappe (2) weiterhin geklemmt und gehalten wird;
- nach dem Abdrehen, Ausbringen (103) der Schweißzange ohne die Elektrodenkappe aus dem Einbringbereich (5), während die abgedrehte Elektrodenkappe (2) weiterhin geklemmt und gehalten wird; und
- nach dem Ausbringen, Loslassen (104) der abgedrehten Elektrodenkappe (2).
